## Europäisches Patentamt
## European Patent Office
## Office européen des brevets

(11) Publication number: **0 018 129**
**B1**

# EUROPEAN PATENT SPECIFICATION

(45) Date of publication of patent specification: **17.11.82**

(21) Application number: **80301026.3**

(22) Date of filing: **01.04.80**

(51) Int. Cl.³: **H 04 L 9/00, H 04 L 11/26, H 04 K 1/00**

(54) **Method of providing security of data on a communication path.**

(30) Priority: **02.04.79 US 25829**

(43) Date of publication of application:
**29.10.80 Bulletin 80/22**

(45) Publication of the grant of the patent:
**17.11.82 Bulletin 82/46**

(84) Designated Contracting States:
**CH DE LI**

(56) References cited:
**DE - A - 2 801 608**
**GB - A - 2 020 513**
**US - A - 3 798 359**
**US - A - 3 798 605**

(73) Proprietor: **MOTOROLA, INC.**
**1303 East Algonquin Road**
**Schaumburg Illinois 60196 (US)**

(72) Inventor: **Hogg, Gerald James**
**2504 East Geneva Drive**
**Tempe, Arizona 85252 (US)**

(74) Representative: **Newens, Leonard Eric et al,**
**F.J. CLEVELAND CO. 40/43 Chancery Lane**
**London WC2A 1JQ (GB)**

Courier Press, Leamington Spa, England.

## Method of providing security of data on a communication path

The invention relates to a method for protecting the security and privacy of a data transmission system by use of identification and key words at an otherwise unprotected terminal.

The dial-up network for time sharing and data base management applications can be viewed as a special case of a dedicated-line network. Use of a dial-up configured network requires special treatment when consideration of security and related operations are made.

The remote site equipment is typically a teleprinter or CRT terminal with either an integral or separate telephone coupler/modem. The equipment operates using a synchronous line discipline.

Operation is based on the interactive nature of the dialogue between the computer and the terminal. No error checking is generally available so full duplex operation is used so that the operator can verify that he has entered the desired character into the computer. Basically, this is accomplished by entering data at the keyboard and transmitting it directly to the computer. The data is not printed until the computer sends back, or echos, the characters that it has received. Thus, the printer prints what the computer receives and sends back. The operator knows what was typed so may judge if the computer is receiving the proper information.

Host site equipment or dial-up concentrator site equipment consists of a dial-up modem connected to a communications line adapter which in turn is connected to a computer. When a remote terminal calls, the modem answers the ring and selects a vacant line to the computer then notifies, via a connect signal, that the terminal is connected. The computer usually asks the terminal user for identification and, if correct, aids the terminal user by means of prompts, etc. to follow desired tasks.

Operating a remote terminal is a rudimentary task, consisting of simple sequential steps. The operator turns on the terminal, dials the special telephone numbers supplied, places the telephone in the coupler and waits for computer response. Typically, the computer asks for an account number and a password. The operator enters these numbers (committed to memory or recorded) and waits for the computer to accept his log-on requests (some systems may not require log-on steps). If accepted, a prompt character is printed indicating that the computer is ready to begin an interactive dialogue.

Problems relating to the security of systems accessible by dial-up lines abound. The main threat is that anyone who can call up the computer may be able to use confidential data or programs stored in the computer data base for their own unauthorized use. Prevention of these problems has been attempted in nearly every major system in use. Two general solutions form a basis for discussion of security problems.

One solution to the security problem is that of terminal authentication. In the dial-up network scenario, any terminal may be connected to the host given the phone number of the dial-up modem at the host site. Terminal authentication is the means by which the host is assured that the terminal connected is one which is allowed and not that of an intruder. Terminal authentication is important where many legitimate computer users share a single terminal. It is assumed that anyone using the terminal is authorized.

When the users of a computer system are dispersed and/or mobile it has been considered desirable to control access to the host by controlling the user rather than the terminal. Each user then has special passwords and/or account numbers which allow individual authentication to the host.

The subject of privacy is closely related to the effect of many of the threats discussed below. Privacy is the safeguarding of all data passing from the terminal to the destination and back from accidental or premeditated examination while en route. Some schemes for authentication and authorization may not include facilities for privacy, but privacy techniques almost always provide these as side benefits.

In the dial-up network, the phone line which connects the terminal coupler to the host consists of several segments. The first segment (local loop) connects the coupler to the local phone switching centre. The centre may be in the basement of the same building or in a separate building some distance away. The local loop typically passes through several connection blocks on its way to the switching centre. The host is similarly connected. Thus, even a dial-up line which may use many different paths from the switching centre used by the terminal to the switching centre used by the host uses a single vulnerable path at each end of the line.

The wire tap is the major threat to these lines. A passive wire tap can be connected which allows all authentication and authorization data to be recorded for later use in accessing the host.

An active wiretap may be connected to the line allowing access to the host by the "piggyback" method. This operation by the wire tapper allows the legitimate user's log-on information to pass through the tap to the host. When the user enters the sign off command, however, the active tap intercepts this message and simulates the sign-off message to the user. The actual sign-off is not passed to the host. Instead the wire tapper takes control of the user's files with no record of this illegitimate modification or readout being made.

These and other shortcomings and problems can be solved e.g. in a centralized verification system by maintaining passwords or key words in an encrypted form while in the dial-up network domain.

US—A—3 798 605 discloses two embodiments of such a centralized verification system: a password system and a handshaking system. The password method is utilized to identify subscribers of the system and make available to them all information to which they are authorized to have access. Every subscriber or user of the computer system has in his possession a unique key combination of binary symbols known only to himself and the computer's system to control the ciphering of all transmissions from the terminal by means of a block cipher cryptographic device. Initially, a block of binary digits consisting of a combination of data and a continuously changing password is enciphered as a block by means of a cryptographic device. The resulting block cipher output of the cryptographic device is then transmitted across a channel to the central processing unit which receives the block cipher. Upon receipt of the ciphertext, an identical deciphering device, as units at the terminal, and operates under the control on the inverse of the subscriber binary key, deciphers the ciphertext into a clear message. If the communication is uncorrupted, then the transmitted data and password are retrieved. The receiving central processor performs a match of the continuously changing password to determine whether the subscriber is in fact authorized to continue communication with the data processing system.

This password system requires the terminal and the host to have identical, synchronized random number generators (e.g. synchronized clocks).

The handshaking approach to communications between the terminal and the central processor is utilized to maintain privacy. In this sytem, as with the password system, the user or subscriber must first identify himself at the terminal to the central processing unit by name or some other non-enciphered representation. Upon receipt of this identifier, the central processor selects the appropriate block key which will control the cryptographic device of the central processor which deciphers all subsequent received messages. Following the initial identification sequence, the subscriber enters a message at the terminal which is enciphered in accordance with his unique subscriber key $K_A$. At the receiving central processing station, a portion of the received message is stored until verification is complete, and the remaining second portion of the message is utilized in combination with other data obtained from the central processor to form a reply which is enciphered by the central processor with the same user key $K_A$. This reply message is then transmitted to the terminal.

Upon receiving the reply message, the terminal deciphers the reply which results in recovery of a selected portion of the received ciphertext which if properly deciphered corresponds with a portion of the first data transmission from the terminal to the central processor. If a comparison is successful at the terminal, a second transmission is sent from the terminal to the central processor again utilizing a portion of the received message as a part of this transmission. In a similar manner to operations at the terminal, the central processor also deciphers the received ciphertext and makes a comparison of a portion of the deciphered message with prior transmitted data that is retrieved by the terminal. Upon successful comparisons, both the central processor and the terminal user each determines that the other is in fact a valid communicator and authorized to receive further communications.

This handshaking system entails a more intricate protocol and fails to provide a random, single-use session key as claimed.

This last is a serious drawback for a security system using a public encryption algorithm such as DES.

The invention seeks to avoid the drawbacks of the prior art systems and provides an operating method for a centralized verification system as referred to above offering good security at reduced hardware cost.

It is therefore an object of the invention to provide a system operating method wherein at least some of the account numbers, passwords or key words are never present in the dial-up network portion of the data system except in encrypted form.

It is another object of the invention to provide data system security without necessity for locked hardware enclosures.

It is yet another object of the invention to provide security and privacy in a data transmission system used on a dial-up network by means of encrypted key words.

These and other objects of the invention will become more readily understood upon study of the detailed description of the invention together with the drawings in which:

Figure 1 is a block diagram of first embodiment of the invention in which identification and keywords are contained or stored within a remote terminal,

Figure 2 illustrates in a flow chart form step by step procedure for enabling secure data transmission in the system of Figure 1,

Figure 3 is a block diagram of a second embodiment of the invention in which identification and key words are entered by the user, and

Figure 4 illustrates in flow chart form a step by step procedure for enabling secure data transmission in the system of Figure 3.

**0018129**

There are two scenarios in which key word security may be subject to operational problems. The first situation exists where a remote data terminal is relatively secure; i.e. the users access to the terminal is well controlled and the main security threat is from a wire tap. The second situation exists where user access to the terminal is not well controlled and an additional threat is posed by an unauthorized user.

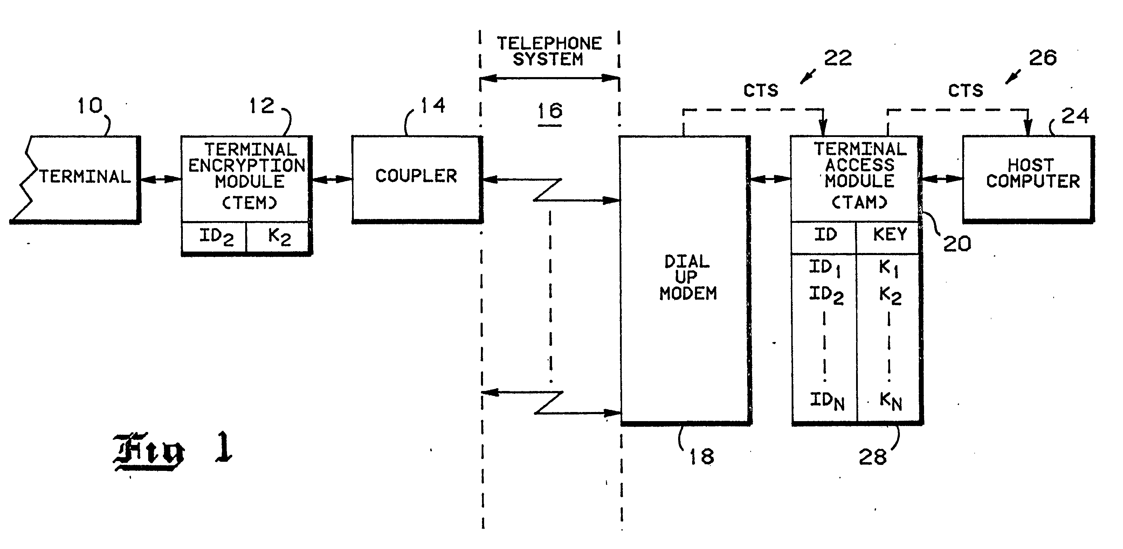

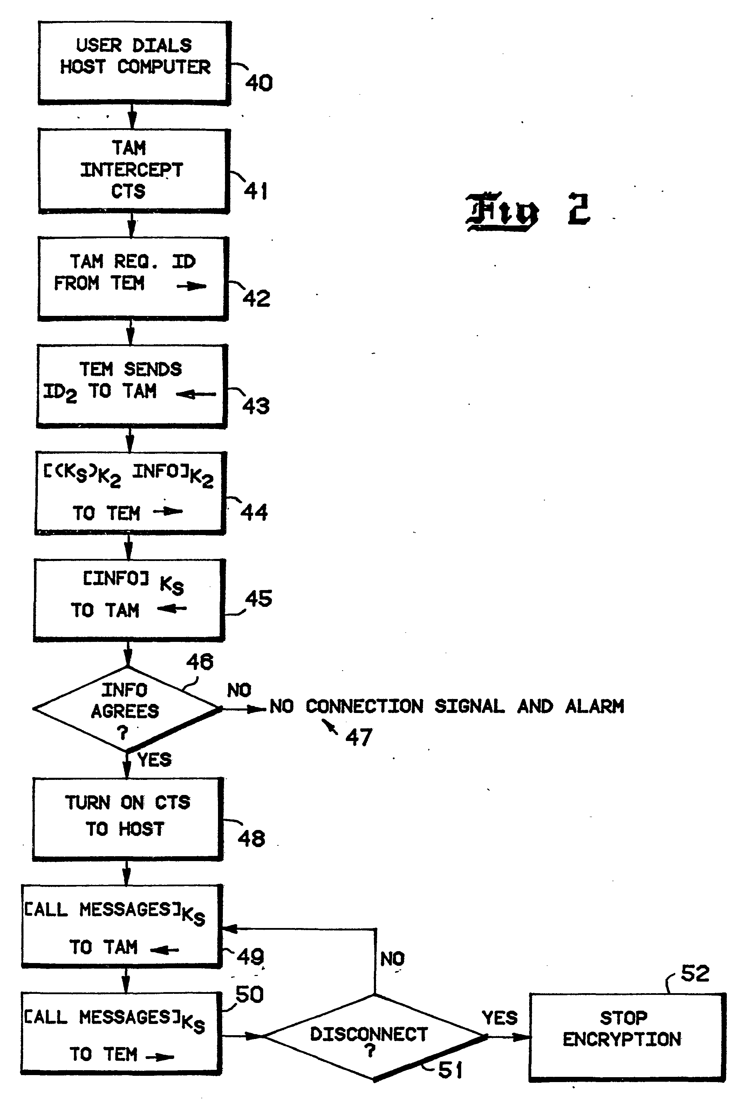

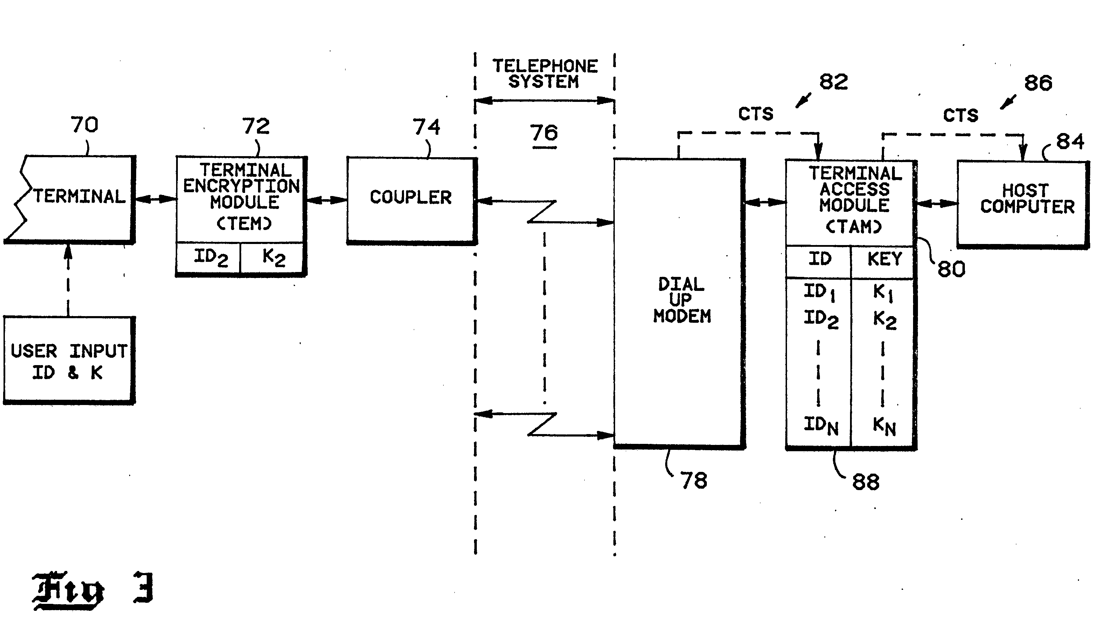

A first embodiment of the invention is illustrated in Figure 1. Figure 1 embodiment is intended to solve the first threat case, above, that of the wire tap. Terminal 10 is connected by means of terminal encryption module (TEM) 12 to telephone coupler 14. TEM 12 contains an identification code, in the illustrated case, $ID_2$. TEM 12 also contains primary key $K_2$. Coupler 14 is connected by means of dial-up telephone system 16 to dial-up modem 18. Dial-up modem 18 is connected to terminal access module (TAM) 20 when Dial Connect Signal (CTS) 22 is present. TAM 20 is connected to host computer 24 when CTS 26 is present. TAM 20 contains table look up pairs 28 of $ID_n$ and $K_n$. $ID_n$ and $K_n$ pairs are related to terminals, each having an $ID_n/K_n$ code/keyword pair and each pair is unique to its terminal.

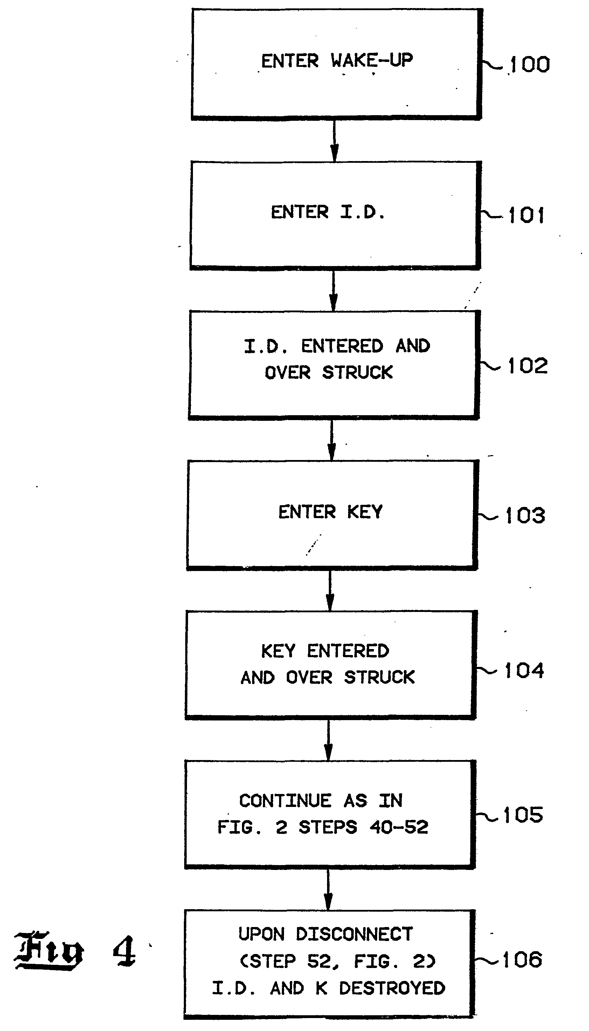

In operation, the system of the invention follows procedural flow chart of Figure 2. Referring thereto, it will be seen that in the first step of the method of the invention, the user dials the computer 40 and places the handset of his telephone in an audio coupler if this connection is not already made electronically. In the second step, the terminal access module (TAM) (20 of Figure 1) intercepts a dial connect signal (CTS) 41, and sends a request for identification to terminal encryption module (TEM) (12 of Figure 1). The TEM responds by sending $ID_2$ (in this illustration) 43 which may be a two character identification code $(ID_2)$ which has been stored in the TEM at installation or subsequently. The TAM does a table (28 of Figure 1) look up to find and call up $K_2$, the primary key word which is associated with $ID_2$. The next step 44 is to send to TEM (12 of Figure 1) a session key, $K_s$ and randomly generated information, (INFO) both of which are encrypted by $K_2$ according to the algorithm described by a standard data encryption system such as that described in Federal Information Processing Standard Publication 46 and available through the National Technical Information Service. This encrypted data is decrypted by use of primary key $K_2$, locally stored at TEM (12 of Figure 1) and decrypted $K_s$ is then used to encrypt the decrypted INFO for transmissions back to TAM (20 of Figure 1). If information received and decrypted by the TAM agrees 46 with that encrypted and sent by the TAM 44, the system sends a dial connect signal (CTS) to host computer (24 of Figure 1). If the information does not agree 46, no CTS is sent and an alarm may be made to occur at the TAM. Assuming CTS is sent to the host computer 48, all messages to the TEM 49 and to the TAM 50 are encrypted using $K_s$ as the encryption key. When a disconnect signal is received by the TAM 51, encryption and decryption cease and, of course, the telephone line is disconnected by the hang up which caused the disconnect.

Upon review of the operating procedure described above, it will be seen that $K_2$ is never actually present on the telephone wires. It is not, therefore, subject to the wire tap threat. The only time $K_2$ is used on the wire at all is in step 44 of Figure 2 where session key $K_s$ and information are encrypted by $K_2$ and sent to the TEM. $K_2$ is not present in this transmission and the only way in which a wire tap could reveal $K_2$ is if there were prior knowledge of $K_s$ and/or the associated information encrypted by $K_2$. But $K_s$ and the information are randomly generated for each contact with the user. Therefore since $K_2$ is used to encrypt $K_s$, $K_s$ remains secure and may be used for encryption and decryption of all messages 49, 50 for the rest of the session for which $K_s$ is generated.

In another embodiment of the invention (see Figure 3), which is similar to that described above and in Figures 1 and 2, $ID_n$ and primary key, $K_n$, are not contained in the remote terminal TEM 72. This slightly different embodiment of the invention may be utilized where the remote terminal is not secure and where the onus of security is placed upon the human users of the system. This might be the case, for example, where the remote terminal is a portable unit or where, by necessity, it must be located in a relatively public or insecure location.

In operation, the procedure is similar to that described for the embodiment of Figure 1 except for differences required by the face that $ID_n$ and $K_n$ do not reside in TEM 72. It is therefore a requirement for the user to supply his ID code and primary key to the TEM. The code and key become peculiar to the user rather than the terminal. In this preferred embodiment of the invention, the user puts terminal 70 in a local operational mode and inserts a wake-up character by means of the keyboard 100. Terminal 70 responds with "ENTER ID" 101 or the equivalent. The user enters his ID which may be $ID_2$, for example. Terminal 70, under control of TEM 72, prints $ID_2$. If the user verifies that the printed ID is correct he strikes "CR" (carriage return) and terminal 70 overstrikes the ID 102 to maintain security of the code. Terminal 70 then prints "ENTER KEY" 103 or the equivalent. The user then enters his primary key, $K_2$ (in this example), terminal 70 responds by printing "$K_2$" and when the user is satisfied that his key has been correctly printed he strikes "CR". Terminal 70 responds by overstriking the printed "$K_2$" 104 to maintain security of the key. The users "$ID_2$" and "$K_2$" now are resident in TEM 72 and the system, temporarily, appears to be the same as the system of Figure 1. The operational procedure of Figure 2 is followed from this point on with one exception: when step 52 of Figure 2 is reached, "stop encryption", $ID_2$ and $K_2$ information which has been temporarily resident in TEM 70 is destroyed 106. Since $ID_2$ and $K_2$ are now removed from TEM 70, an unauthorized user is not able to access the computer through terminal 70 subsequent to the authorized user's access.

As in the first embodiment of the invention, above, $K_2$, the primary key, is never present on the dial-up network and is not subject to a wire tap threat. $K_s$, the session key, is only used as encrypted by $K_2$ or as a data encrypting key so it is also not subject to the wire tap threat.

The encryption/decryption algorithm is publicly known, but the keys used are protected (and so the data sent over the dial-up network are protected) so long as the ID/Key pairs are not available to one who would breach security.

Control of authorized users is accomplished at the host end at TAM 20 by adding or deleting ID/Key pairs. A previously authorized user may be locked out by removal of the ID/Key pair previously assigned. A new user can become authorized when an ID/Key pair is entered into the TAM 20 and the same ID/Key pair issued to the user. Anyone without the proper ID/Key pair cannot gain access to the computer.

## Claims

1. A method for providing security of data on a communications path between a host and a remote terminal, comprising the steps of:
   providing a valid list of user identification code and primary key code pairs to the host;
   assigning a specific user identification code and associated primary key code pair to a user, said code pair being one of said valid list of pairs,
   communicating said specific user code to the host by means of the communications path;
   searching said valid list of pairs by said specific user code to find said primary key of said specific user code and said associated primary key pair;
   generating and encrypting a new session key using said found primary key for said encrypting;
   sending said encrypted session key and information to the remote terminal by means of the communications path said information being encrypted with said found primary key;
   decrypting said encrypted session key and said information at the remote terminal using said found primary key; and
   communicating further information between the host and the remote terminal by means of the communications path, said further information being encrypted and decrypted by said session key.

2. The method according to Claim 1 further comprising the steps of:
   destroying said user code and said primary key in the remote terminal upon completion of the communications session.

3. The method according to Claim 1 further comprising the step of:
   installing said specific user identification code and said associated primary key in the remote terminal for automatic acquisition thereto upon request from the host.

4. A method for providing security of data on a communications path between a host and a remote terminal, comprising the steps of:
   providing a valid list of user identification codes and primary key code pairs to the host;
   assigning a specific user identification code and associated primary key code pair to a specific user, said code pair being one of said valid list of pairs;
   requiring the entry by said user of said specific user code and primary key code pair at the remote terminal;
   communicating said specific user code to the host via the communication path;
   searching said valid code pair list by said specific user code to find said primary key of the specific user code and said associated primary key pair;
   generating and encrypting a new session key using said found primary key for said encryption;
   sending said encrypted session key and some information to the remote terminal via the communication path from the host;
   decrypting said encrypted session key at the remote terminal by means of said found primary key;
   transmitting further information between the remote terminal and the host, said further information being encrypted by said session key; and
   destroying said specific user code and said primary key at the remote terminal upon completion of the communications session.

## Patentansprüche

1. Verfahren zum Sichern von Daten auf einem Uebertragungsweg zwischen einer Verarbeitungsstelle und einer davon entfernten Station, gekennzeichnet durch die folgenden Schritte:
   — Aufstellen einer gültigen Liste von Paaren von Benützer-Identifikationen und primären Kodeschlüsseln für die Verarbeitungsstelle,
   — Zuordnen eines Paares, bestehend aus einer spezifischen Benützeridentifikation und einem zugehörigen Kodeschlüssel zu einem Benützer, wobei dieses Paar eines aus der Liste der gültigen Paare ist,
   — Uebertragen der spezifischen Benützer-identifikation und die Verarbeitungsstelle über den Uebertragungsweg,
   — Durchsuchen der Liste gültiger Paare anhand der übertragenen spezifischen Be-
nützeridentifikation, um den spezifischen Pri-
märschlüssel des Paares, bestehend aus be-
sagter Benützeridentifikation und einem zuge-
hörigen Primärschlüssel, zu finden,
— Erzeugen und Verschlüsseln eines neuen
Momentanschlüssels, wobei der gefundene
Primäschlüssel für dieses Verschlüsseln verwendet wird,
— Uebertragen des verschlüsselten Momentanschlüssels und von Daten über den
Uebertragungsweg an die Station, wobei diese
Daten mit dem gefundenen Primärschlüssel verschlüsselt sind,
— An der Station, unter Verwendung des ge-
fundenen Primärschlüssels, durchgeführtes Ent-
schlüsseln des verschlüsselten Momentan-
schlüssels und der Daten, und
— Uebertragung weiterer Information über
den Uebertragungsweg zwischen der Verarbeitungsstelle und der Station, wobei diese weitere
Information mittels des Momentanschlüssels
verschlüsselt und entschlüsselt wird.

2. Verfahren nach Anspruch 1, dadurch gekennzeichnet, dass in der Station die
Benützeridentifikation und der Primärschlüssel
nach Ende der Uebertragungssitzung zerstört
werden.

3. Verfahren nach Anspruch 1, dadurch gekennzeichnet, dass die Benützeridentifikation
und der zugehörige Primärschlüssel in der ent-
fernten Station eingefügt sind, um dort auf
Anfrage der Verarbeitungsstelle hin automatisch benützt zu werden.

4. Verfahren zum Sichern der Geheimhaltung
von Daten längs eines Uebertragungsweges
zwischen einer Verarbeitungsstelle und einer
davon entfernten Station, gekennzeichnet durch
die folgenden Schritte:
— Aufstellen einer gültigen Liste von Paaren
von Benützer-Identifikationen und primären
Kodeschlüsseln für die Verarbeitungsstelle,
— Zuordnen eines Paares, bestehend aus
einer spezifischen Benützeridentifikation und
einem zugehörigen Kodeschlüssel zu einem
Benützer, wobei dieses Paar eines aus der Liste
der gültigen Paare ist,
— Verlangen, dass der Benützer das Paar,
bestehend aus spezifischer Benützeridentifikation und primären Kodeschlüssel an der Station
eingibt,
— Uebertragen der spezifischen Benützeridentifikation und die Verarbeitungsstelle über
den Uebertragungsweg von der Zentralstelle
an die Station, über den Uebertragungsweg,
— An der Station, unter Verwendung des gefundenen Primärschlüssels, durchgeführtes
Entschlüsseln des verschlüsselten Momentan-
Schlüssels,
— Uebertragen weiterer Daten zwischen der
Zentralstelle und der Station, wobei diese
weiteren Daten mittels des Momentanschlüssels verschlüsselt sind, und
— Zerstören der Benützeridentifikation und des Primärschlüssels an der Station, beim Abschluss der Uebertragung.

**Revendications**

1. Méthode pour assurer la sécurité de
données lors de leur transmission à travers un
canal d'information entre un ordinateur et une
station éloignée, caractérisée par les étapes suivantes:
— déterminer pour l'ordinateur une liste
valide de paires comportant chacune une identification d'usager et une clef de code primaire,
— attribuer à un utilisateur une paire
composée d'une identification particulière et
d'une clef correspondante, la paire étant une de
celles contenues dans la liste,
— transmettre par le canal cette identification particulière à l'ordinateur,
— rechercher dans la liste, et à l'aide de
ladite identification, pour y trouver la clef primaire faisant partie de la paire contenant cette
même identification,
— engendrer et encrypter une nouvelle clef
provisoire, en utilisant pour cet encryptage, la
clef primaire trouvée,
— transmettre à travers le canal la clef provisoire encryptée et des données à la station,
ces données étant encryptées au moyen de la
clef primaire trouvée,
— décrypter à la station la clef provisoire
ainsi que les données transmises, en utilisant
pour cela la clef primaire trouvée, et
— transmettre à travers le canal d'autres informations entre l'ordinateur et la station
éloignée, ces autres informations étant
encryptées et décryptées au moyen de la clef
provisoire.

2. Méthode selon la revendication 1,
caracterisée en ce que l'identification d'usager
et la clef primaire sont détruites dans la station
à la fin de la communication.

3. Méthode selon la revendication 1, caractérisée en ce que l'identification d'usager et la clef
primaire correspondante sont placées à
demeure dans la station, pour être utilisées automatiquement, sur demande de l'ordinateur.

4. Méthode pour assurer la sécurité de
données lors de leur transmission à travers un
canal d'information entre un ordinateur et une
station éloignée, caractérisée par les étapes suivantes:
— déterminer pour l'ordinateur une liste
valide de paires comportant chacune une identification d'usager et une clef de code primaire,
— attribuer à un utilisateur une paire
composée d'une identification particulière et
d'une clef correspondante, la paire étant une de
celles contenues dans la liste,
— requérir que l'usager introduise dans la
station ladite paire composée d'une identification et d'une clef primaire,
— transmettre par le canal cette identification particulière à l'ordinateur,

— rechercher dans la liste, et à l'aide de ladite identification, pour y trouver la clef primaire faisant partie de la paire contenant cette même identification.

— engendrer et encrypter une nouvelle clef provisoire, en utilisant pour cet encryptage, la clef primaire trouvée,

— transmettre à la station, à partir de l'ordinateur et à travers le canal, ladite clef provisoire encryptée et une information.

— décrypter à la station la clef provisoire transmise, en utilisant pour cela la clef primaire trouvée,

— transmettre d'autre information entre la station et l'ordinateur, cette autre information étant encryptée au moyen de la clef provisoire, et

— détruire l'identification d'usager et la clef primaire à la station à la fin de la communication.

**Fig 1**

| Label | Description |
|---|---|
| 10 | TERMINAL |
| 12 | TERMINAL ENCRYPTION MODULE (TEM) — $ID_2$ \| $K_2$ |
| 14 | COUPLER |
| 16 | TELEPHONE SYSTEM |
| 18 | DIAL UP MODEM |
| 20, 28 | TERMINAL ACCESS MODULE (TAM) |
| 24 | HOST COMPUTER |
| 22, 26 | CTS |

TERMINAL ACCESS MODULE (TAM)

| ID | KEY |
|---|---|
| $ID_1$ | $K_1$ |
| $ID_2$ | $K_2$ |
| | |
| $ID_N$ | $K_N$ |

0018129

0018129

Fig 2

TELEPHONE SYSTEM

70 TERMINAL

72 TERMINAL ENCRYPTION MODULE (TEM)

| ID$_2$ | K$_2$ |

74 COUPLER

76

78 DIAL UP MODEM

82 CTS

80

86 CTS

84 HOST COMPUTER

80 TERMINAL ACCESS MODULE (TAM)

| ID | KEY |
| --- | --- |
| ID$_1$ | K$_1$ |
| ID$_2$ | K$_2$ |
| | |
| ID$_N$ | K$_N$ |

88

USER INPUT ID & K

0018129

$\underline{\mathfrak{Fig}}$ 3

0 018 129

```
┌─────────────────────────┐
│                         │
│     ENTER WAKE-UP       │ ~100
│                         │
└─────────────────────────┘
            │
            ▼
┌─────────────────────────┐
│                         │
│       ENTER I.D.        │ ~101
│                         │
└─────────────────────────┘
            │
            ▼
┌─────────────────────────┐
│    I.D. ENTERED AND     │
│      OVER STRUCK        │ ~102
│                         │
└─────────────────────────┘
            │
            ▼
┌─────────────────────────┐
│                         │
│       ENTER KEY         │ ~103
│                         │
└─────────────────────────┘
            │
            ▼
┌─────────────────────────┐
│      KEY ENTERED        │
│    AND OVER STRUCK      │ ~104
│                         │
└─────────────────────────┘
            │
            ▼
┌─────────────────────────┐
│     CONTINUE AS IN      │
│   FIG. 2 STEPS 40-52    │ ~105
│                         │
└─────────────────────────┘
            │
            ▼
┌─────────────────────────┐
│    UPON DISCONNECT      │
│   (STEP 52, FIG. 2)     │ ~106
│   I.D. AND K DESTROYED  │
└─────────────────────────┘
```

𝕱𝖎𝖌 4